(19) Europäisches Patentamt European Patent Office Office européen des brevets

(11) **EP 2 953 255 A1**

(12) **EUROPEAN PATENT APPLICATION**

(43) Date of publication:
09.12.2015 Bulletin 2015/50

(51) Int Cl.:
*H02M 7/483* (2007.01)

(21) Application number: **14171352.9**

(22) Date of filing: **05.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alstom Technology Ltd.**
**5400 Baden (CH)**

(72) Inventors:
• **FEKRIASL, Sajjad**
**Stafford ST17 0AA (GB)**

• **TRAINER, David Reginald**
**Derby DE24 0AQ (GB)**
• **JASIM, Omar Fadhel**
**Nottingham NG8 2RW (GB)**
• **MORENO, Francisco Jose**
**Stafford ST16 2QZ (GB)**

(74) Representative: **Davies, Philip**
**Haseltine Lake LLP**
**Redcliff Quay**
**120 Redcliff Street**
**Bristol**
**BS1 6HU (GB)**

(54) **Hybid voltage source converter and control thereof**

(57) This application relates to a relatively low-cost voltage source converter of the controlled transition type that has a low footprint. The converter comprises a plurality of phase limbs, typically three phase limbs, connected between high and low DC terminals (DC+, DC-). Each phase limb comprises a high side director switch ($S_{W1}$, $S_{W3}$, $S_{W5}$) connecting the high DC terminal to an AC node (1 02a-c) for that phase limb and a low side director switch ($S_{W4}$, $S_{W6}$, $S_{W2}$) connecting the AC node to the low DC terminal. Each phase limb also has a chain-link circuit (101a-c) with a first end electrically coupled to the AC node (102a-c) for that phase limb and a second end connected to at least one chain-link circuit of another phase limb. Each chain-link circuit (101 a-c) comprises a plurality of series-connected chain-link cells (103), each comprising at least one energy storage element (105) that can be selectively connected in series with the other modules or bypassed by switches 106. The voltage source converter further comprises first and second additional director switches (201, 202) connected in series between the high and low DC terminals.

Figure 2

**Description**

This application relates to a voltage source converter and to methods and apparatus for control of a voltage source converter, and especially to a voltage source converter for use in high voltage power distribution and in particular to a voltage source converter that provides a controlled transition of voltage.

HVDC (high-voltage direct current) electrical power transmission uses direct current for the transmission of electrical power. This is an alternative to alternating current electrical power transmission which is more common. There are a number of benefits to using HVDC electrical power transmission.

In order to use HVDC electrical power transmission, it is typically necessary to convert alternating current (AC) to direct current (DC) and back again. Historically this has involved a six pulse bridge type topology based on thyristors which is sometimes known as a line-commutated converter (LCC).

Recent developments in the power electronics field have led to an increased use of voltages-source converters (VSC) for AC-DC and DC-AC conversion. VSCs typically comprise multiple converter arms, each of which connects one DC terminal to one AC terminal. For a typical three phase AC input/output there are six converter arms, with the two arms connecting a given AC terminal to the high and low DC terminals respectively forming a phase limb. Each arm comprises an apparatus which is termed a valve and which typically comprises a plurality of sub-modules which may be switched in a desired sequence.

In one form of known VSC, often referred to as a six pulse bridge, each valve comprises a set of series connected switching elements, typically insulated gate bipolar transistors (IGBTs), each IGBT connected with an antiparallel diode. The IGBTs of the valve are switched together to connect or disconnect the relevant AC and DC terminals, with the valves of a given phase limb being switched in antiphase. By using a pulse width modulated (PWM) type switching scheme for each arm, conversion between AC and DC voltage can be achieved.

In high voltage applications where a large number of series connected IGBTs are required the approach does however require complex drive circuitry to ensure that the IGBTs switch at the same time as one another and requires large passive snubber components to ensure that the high voltage across the series connected IGBTs is shared correctly. In addition the IGBTs need to switch on and off several times over each cycle of the AC voltage frequency to control the harmonic currents. These factors can lead to relatively high losses in conversion, high levels of electromagnetic interference and a complex design.

In another known type of VSC, referred to a modular multilevel converter (MMC), each valve comprises a series of cells connected in series, each cell comprising an energy storage element, such as a capacitor, and a switch arrangement that can be controlled so as to either connect the energy storage element in series between the terminals of the cell or bypass the energy storage element. The cells are often referred to as sub-modules with a plurality of cells forming a valve module. The sub-modules of a valve are controlled to connect or bypass their respective energy storage element at different times so as to vary over the time the voltage difference across the valve. By using a relatively large number of sub-modules and timing the switching appropriately the valve can synthesise a stepped waveform that approximates to a sine wave and which contain low level of harmonic distortion. As the various sub-modules are switched individually and the changes in voltage from switching an individual sub-module are relatively small a number of the problems associated with the six pulse bridge converter are avoided.

In the MMC design the high side terminal of each valve will, at least for part of the cycle, be connected to a voltage which is substantially equal to the high DC busbar voltage, DC+, whilst the low side terminal is connected to a voltage which is substantially equal to the low DC busbar voltage, DC-. In other words each valve must be designed to withstand a voltage of $V_{DC}$, where $V_{DC}$ is the voltage difference between the high and low DC busbars. This requires a large number of sub-modules with capacitors having relatively high capacitance values. The MMC converter may therefore require a relatively large number of components adding the cost and size of the converter.

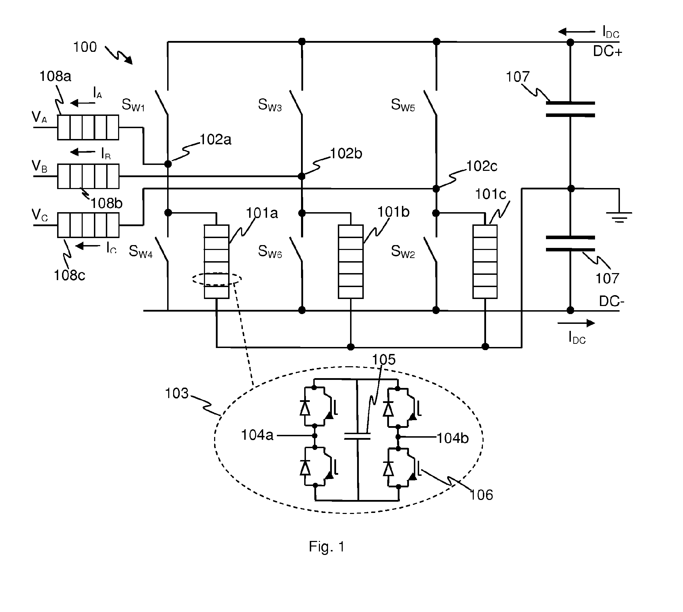

Recently another form of VSC, referred to as a controlled transition bridge (CTB), has been proposed. Figure 1 illustrates a known controlled transition bridge converter 100. This converter has six arms, each arm comprising a switch $S_{W1}$ - $S_{W6}$. Each of the switches $S_{W1}$ - $S_{W6}$, which will be referred to herein as director switches, may comprise a plurality of series connected switch elements (not shown). As with the six-pulse bridge described above each director switch $S_{W1}$ - $S_{W6}$, which can be switched to be conducting or non conducting, connects one DC terminal, i.e. the high or low side DC terminal or busbar (DC+, DC-), to an AC node 102a-c, i.e. a node which is between the two director switches of a given phase and which represents a tap/feed point for the AC current/voltage. The converter 100 also includes a chain-link circuit 101a-c connected to a node between the two director switches forming a particular AC phase limb, ($S_{W1}$, $S_{W4}$; $S_{W3}$, $S_{W6}$ or $S_{W5}$, $S_{W2}$). In other words a first end of the chain-link circuit 101 a-c is coupled to the respective AC node 102a-c. The other (second) end of the each chain-link circuit is connected to ground. Each chain-link circuit comprises a plurality of cells 103 connected in series. Each cell has terminals 104a, 104b for upstream and downstream connection and comprises a capacitor 105 connected with four IGBTs 106 in a full H-bridge arrangement, each IGBT being connected with an antiparallel diode. DC link capacitances 107 are provided for the DC buses. Such a converter is described in WO2011/050847.

In operation, the two arms of a given phase limb may be switched between a high state, where the high side director switch, i.e. $S_{W1}$, $S_{W3}$ or $S_{W5}$, is on, i.e. conducting, and the respective low side director switch, i.e. $S_{W4}$, $S_{W6}$ or $S_{W2}$, is off, i.e. non-conducting, and a low state where the opposite is true. However, unlike in the conventional two level converter, in this converter the transition between the high and low states is controlled by the relevant chain-link circuit 101a-c. For example to transition from the high state to the low state for AC phase A, the cells of the chain-link circuit 101 a are controlled to connect the capacitors in series to provide a voltage substantially equal to DC+ at the top of the chain-link circuit 101 a (i.e. at the connection to the phase limb) whilst director switch $S_{W1}$ is turned off. This means that there is substantially no voltage drop across director switch $S_{W1}$ when it is turned off. The cells of the chain-link circuit can then be controlled to bypass the capacitors of the modules in sequence to ramp the voltage at the top of the chain-link circuit, and hence the voltage at the relevant AC node 102a, down to zero. As the cells of the chain-link circuit are based on a full bridge arrangement the capacitors can be connected to present a negative voltage at the top of the chain-link circuit. The cells of the chain-link circuit can therefore be connected in sequence to step the voltage at the top of the chain-link circuit down to low side DC voltage DC-. Once the voltage at the AC node 102a is substantially down to DC-the director switch $S_{W4}$ can be opened to enable to enable the low state. There is therefore a transition state between the high state and the low state (and vice versa) when the chain-link circuit is used to control the voltage transition at the AC node. It will be noted that during the transition the current for that phase may flow to ground via the chain-link circuit. Thus the DC current is interrupted and hence DC link capacitances 107 are provided to avoid excess voltage ripple on the DC terminals.

In some installations of such a CTB converter additional AC-side chain-link circuits 108a-c may be used to provide desired converter performance. The additional AC-side chain link circuits are connected between the relevant AC node and the AC system and again comprise a plurality of full-bridge cells. The chain-links circuits on the AC side allow the converter to tolerate abrupt changes due to operation of the director switches and are operated to provide smoothing, e.g. filtering, of the waveform at the AC node.

The requirement of the AC-side chain-link circuits does however mean that the CTB converter illustrated in figure 1 requires six chain-link circuits, which again involves a significant number of components. It will be noted that the cells 103 of the chain-link circuits 101a-c are based on a four-switch full-bridge arrangement, whereas the MMC cells may be based on a two-switch half-bridge arrangement. However it will be appreciated that the maximum voltage difference developed across a chain-link circuit during normal operation of the converter 100 is equal in magnitude to $V_{DC}/2$, i.e. the magnitude of DC+ or DC-. As mentioned above for an MMC the maximum normal voltage difference across each valve would be equal to $V_{DC}$ and thus typically the chain-link circuit of an MMC would have a greater number of components to be able to cope with the higher operating voltage experienced in normal use. This means that a controlled transition bridge converter may have a lower footprint than an MMC.

In some applications the size or footprint of a VSC may be a particular concern. For example HVDC is increasingly being considered for use with offshore wind farms. The electrical energy generated by the wind farms may be converted to HVDC by a suitable VSC station for transmission to shore. This requires a VSC to be located on an offshore platform. The costs associated with providing a suitable offshore platform can be considerable and thus the size or footprint of VSC station can be significant factor in such applications.

It would therefore be beneficial to provide a converter with good performance and operating characteristics but with a relatively small footprint.

Embodiments of the invention are therefore directed at an improved converter and methods and apparatus for the control thereof that at least mitigate at least some of the above mentioned disadvantages.

Thus according to the present invention there is provided a voltage source converter comprising:

  a plurality of phase limbs connected between high and low DC terminals;
  wherein each phase limb comprises:

    a high side director switch connecting the high DC terminal to an AC node for that phase limb;
    a low side director switch connecting the AC node to the low DC terminal; and
    a chain-link circuit, a first end of the chain-link circuit being electrically coupled to the AC node for that phase limb and a second end of the chain-link circuit being connected to at least one chain-link circuit of another phase limb;

    wherein each chain-link circuit comprises a plurality of series-connected chain-link modules, each of the chain-link modules comprising at least one energy storage element that can be selectively connected in series with the other modules or bypassed;
    the voltage source converter further comprising first and second additional director switches being connected in series between the high and low DC terminals.

Embodiments of the present invention provide a voltage source converter of the controlled transition bridge type but with first and second additional director switches. The provision of the first and second director switches allows an extra degree of freedom and allows for good converter performance without the need for chain-link circuits on the AC side to provide active filtering. Additionally no large DC link capacitances are required and only relatively small DC capacitances may be used or, in some embodiments, no DC link capacitance may be used. This reduces the number of components required compared to other converter designs thus reducing the cost and footprint of the converter.

In some embodiments the second ends of each of said chain-link circuits are connected to a common connection point, i.e. the chain-link circuits are connected in a Wye connection. In such embodiments the common connection point may be electrically connected to a first node located in the series connection between said first and second additional director switches. As mentioned in such embodiments there may be no DC link capacitors connected between the high and low DC terminals.

Alternatively the chain-links circuits may all connected to one another in a loop such that the second end of one chain-link circuit is connected to the first end of the next chain-link circuit in the loop, i.e. in a Delta connection. In such embodiments first and second capacitances may be connected in parallel with said first and second director switches, with an inductor connected between a first node located in the series connection between said first and second additional director switches and a second node located in the series connection between said first and second capacitances. A controller may be configured to control said first and second additional director switches to minimise current flow through said inductor.

In some embodiments the director switches of the phase limbs may comprise thyristors.

In some embodiments a controller may be configured to control the chain-link circuits as current controlled voltage sources for at least part of a power cycle. The controller may be configured to control the chain-link circuit of a phase limb as a high-side voltage source during a period when the low-side director switch of that phase limb is on, and as a low-side voltage source during a period when the high-side director switch of that phase limb is on.

In some embodiments the controller may be configured to control said chain-link circuits and said first and second additional director switches to generate a trapezoidal voltage waveform at the AC node of each phase limb. The trapezoidal waveform may be a single slope or a multi-slope trapezoidal waveform.

In some embodiments the controller may be configured to control the chain-link circuits and the first and second additional director switches to apply space-vector pulse-width-modulation control.

In some embodiment the voltage source converter may comprise at least one of a high-side DC filter connected to said high-side DC terminal and a low-side DC filter connected to said low-side DC terminal.

There may be three phase limbs and the converter comprises only three chain-link circuits.

The first and second additional director switches may each comprise a plurality of switch elements, for example switch elements such as IGBTs.

Aspects of the invention also relate to a method of operating a voltage source converter such as described above. The method may involve controlling the first and second additional director switches as described above. The method may involve controlling the chain-links circuits as current controlled voltage sources. The method may involve using a trapezoidal reference waveform for the AC voltage waveform and/or may involve space-vector pulse-width modulation techniques.

The invention will now be described by way of example only with reference to the following drawings, of which:

Figure 1 illustrates a known controlled transition bridge type converter;

Figure 2 illustrates a converter of the controlled transition bridge type according to an embodiment of the invention;

Figure 3 illustrates a converter according to another embodiment of the invention;

Figure 4 illustrates a converter according to a further embodiment of the invention;

Figure 5 illustrates various voltage waveforms that can be generated using SVPWM techniques;

Figure 6a and 6b shows simulated results for a converter according to embodiments of the present invention; and

Figure 7 shows further simulated results.

Embodiments of the present invention relate to controlled transition bridge type converters having a chain-link circuit to control the voltage transition at the AC node of a phase limb during a transition between turning one of the director switches off and turning the other director switch on. Embodiments of the invention use two additional director switches, in addition to the director switches of the phase limbs, the additional director switches being connected in series between the high and low side DC terminals of the converter. The provision of these additional director switches provides an extra degree of freedom in operation of the converter. By using suitable control algorithms, as will be described in more detail later, the converter can have performance which is at least as good as other proposed converter designs. The presence of the two additional director switches does mean however that the AC side chain-links describes above with regard to figure 1 are not required. The converter design according to some embodiments of the invention reduces or even avoids the need for any expensive or complex AC side filtering. Thus, for a three-phase converter, only three chain-link circuits may be provided i.e. only those chain-link circuits that are configured to control the voltage transition of the relevant phase limb. Likewise in some embodiments no complex DC side filtering may be needed. In addition the provision of the two additional director switches can eliminate the need for relatively large DC link capacitances and embodiments of the invention may use only relatively small DC link capacitors or even omit such DC link capacitances.

Embodiments of the invention therefore provide a converter design that, for a three-phase converter, may require just three chain-link circuits and eight director switches and which may have no or only relatively small DC link capacitances. This represents a significant reduction in the number of components and hence the footprint of the converter as compared to the known converter designs discussed above. This can represent a significant saving in cost of the converter itself and the platform required for a converter in a remote location, such as an offshore platform.

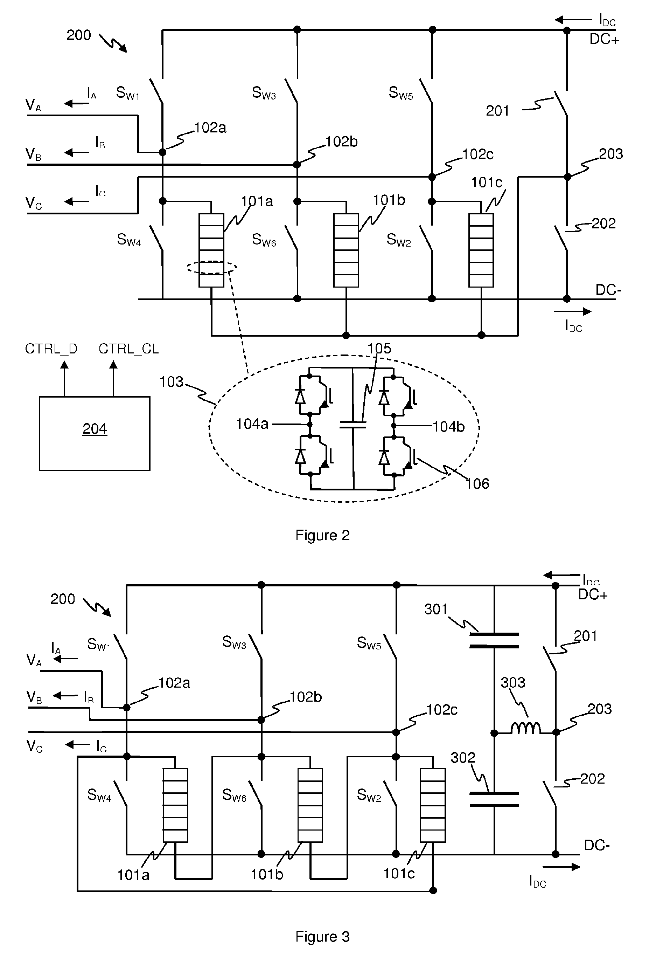

**Figure 2** illustrates a converter according to an embodiment of the invention. Components shown in figure 2 which are similar to those discussed previously in relation to figure 1 will be identified by the same reference numerals.

Figure 2 shows a converter 200 having three phase limbs, with each phase limb having a high side director switch ($S_{W1}$, $S_{W3}$, $S_{W5}$) connecting the high side DC terminal DC+ to a respective AC node (102a, 102b, 102c) and a respective low side director switch ($S_{W4}$, $S_{W6}$, $S_{W2}$) connecting the respective AC node to the low side DC terminal DC-. Associated with each phase limb is a respective chain-link circuit 101 a, 101b, 101c, with a first end of the respective chain-link circuit connected between the respective director switches for that phase limb, i.e. coupled to the respective AC node. The second ends of the three chain-link circuits are connected to a common connection point, which in this embodiment is not connected to ground.

As discussed above in relation to figure 1 each of the chain-link circuits may comprise a plurality of series connected cells 103, each cell having controlled switches 106 and at least one energy storage element such as a capacitor 105, the switches 106 being arranged in a full H-bridge arrangement.

In this embodiment there are also two additional director switches 201 and 202. The two additional director switches 201 and 202 are connected in series between the high side DC terminal DC+ and the low side DC terminal DC- with a node 203 between the two additional director switches being connected to the common connection point of the chain-link circuits 101a-c, i.e. to the second ends of the chain-link circuits 101a-c. In this embodiment the additional director switches 201, 202 effectively replace the DC link capacitances 107 shown in figure 1. The additional director switches 201 and 202 thus provide the ability to create a path for current to flow from/to the high side DC terminal DC+ and the low side DC terminal DC- respectively to the common connection point of the chain-link circuits 101 a-c. As will be described in more detail later this can allow a DC current flow to/from any chain-link circuits operating in a current control mode, even in circumstances when all of the high side director switches ($S_{W1}$, $S_{W3}$, $S_{W5}$) of a phase arm are non-conducting or all of the low side director switches ($S_{W4}$, $S_{W6}$, $S_{W2}$) of a phase arm are non-conducting.

The two additional director switches also avoid the need for chain-link circuits 108a-c on the AC side as shown in figure 1.

Compared to the converter illustrated in figure 1 the embodiment of figure 2 thus has two additional director switches 201 and 202 but omits the AC side chain-link circuits 108a-c and also any relatively large DC link capacitances 107. This results in a significantly reduced number of components as compared to the converter shown in figure 1, whilst allowing at least comparable performance.

The additional director switches may be any suitable type of controlled switching element, such as IGBTs or the like. In practice the additional director switches 201 and 202 may be implemented by a plurality of switching elements, such as individual IGBTs which may be connected, for example, in series.

Embodiments of the invention therefore provide a relatively low-cost and relatively low footprint controlled transition type converter.

In use a control unit 204 controls the six main director switches of the phase limbs, $S_{W1}$ - $S_{W6}$ along with the three chain-link circuits 101a-c and the two additional director switches 201 and 202. The control unit may therefore generate a plurality of director switch control signals CTRL_D and also a plurality of chain-link circuit control signals CTRL_CL. The director switches are turned on and off in a desired sequence for each phase limb. During a transition between a period when one director switch of a phase limb is being turned off and the other director switch of the relevant phase limb is being turned on the respective chain-link circuit may be operated to provide a controlled voltage transition. The chain-link circuits may be controlled so the main director switches $S_{W1}$ - $S_{W6}$ are turned on and off with substantially no voltage difference across the director switches and to provide a controlled voltage transition. In addition the chain-link circuits in embodiments of the present invention may be controlled as current controlled voltage sources. This allows control strategies that make use of current controlled voltage sources to be used. For instance the chain-link circuits may be operated, together with director switches (both the six main switches and the two additional director switches) to provide a voltage waveform at each AC node which is substantially trapezoidal, e.g. a single slope or dual-slope trapezoidal waveform, and also to provide desired currents to meet AC and DC demand. In other embodiments space-vector pulse width modulation (SVPWM) techniques may be used. The control strategy may make use of current mapping techniques as will be described later.

In some embodiments the director switches $S_{W1}$ - $S_{W6}$ of the phase limbs may be implemented by thyristors. The presence of the chain-link circuits 101a-c to control the voltage at the AC node of each phase limb so as to allow soft switching, together with the control schemes outlined, allow the use of thyristors for the director switches of the phase limbs. Converters that use IGBT type switches may sometimes suffer from large disturbances, e.g. faults, which may result from the relatively limited current carrying capacity of the IGBT type transistors. However, by using thyristors, the capability of fault-tolerance against such external disturbances is improved. The use of relatively high-current carrying switches such as thyristors as the director switches of the voltage source converter, with chain-link circuits to control the voltage across the high-current carrying switches represents an advantageous and novel aspect of embodiments of the present invention.

Embodiments of the present invention can use the chain-link circuits 101a-c in either Wye (Y) or Delta (Δ) connections. Figure 2 shows the chain-link circuits configured in the Wye connection. Figure 3 illustrates another embodiment of the invention, where similar components are designated by the same reference numerals, but the chain-link circuits 101a-c are connected in the Delta connection. In the Delta configuration the first end of each chain-link circuit 101a-c is connected to a node between the two director switches for the phase limb as described previously, i.e. coupled to the AC node. However the second end of a first chain-link circuit 101 a is connected to the first end of a second chain-link circuit 101 b, with the second end of the second chain-link circuit 101 b being connected to the first end of the third chain link circuit 101 c and the second end of the third-chain link circuit 101 c being connected to the first end of the first chain link circuit.

In this embodiment the additional director switches do not couple to a common connection point of the chain-link circuits and to ensure correct current circulation first and second capacitances 301 and 302 are connected in parallel with the additional director switches 201 and 202, with an inductor connecting a node between the two capacitances 301, 302 to node 203 between the two additional director switches 201, 202. This arrangement in effect provides a high side DC filter and a low side DC filter. In this embodiment control of the additional director switches 201 and 202 is based on keeping the voltage of the first and second capacitances substantially equal, so as to keep the converter balanced. In some embodiments the control unit 204 (not shown in figure 3) may be arranged to control the additional director switches 201 and 202 to minimise current flow through inductor 303.

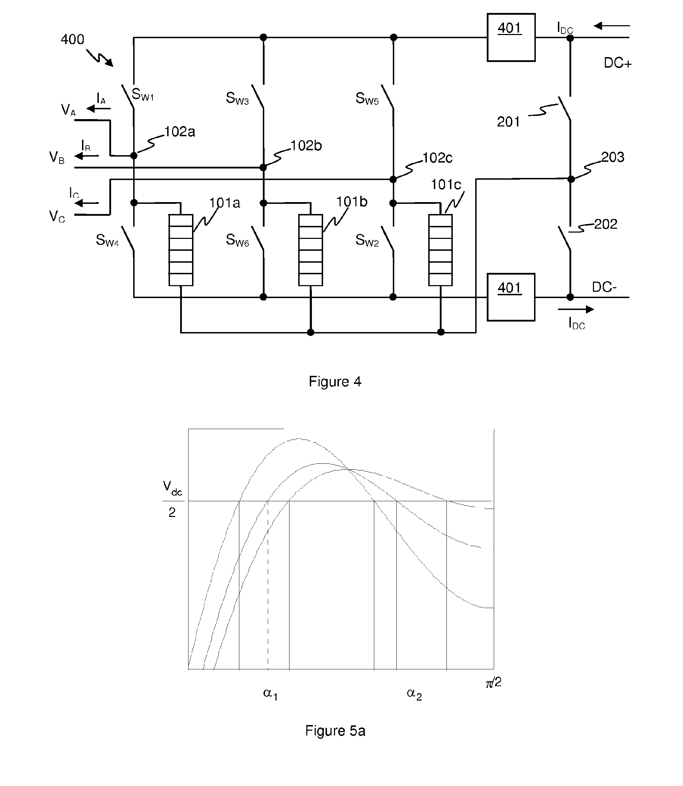

In some embodiments there may be active filtering provided on the DC side. Additionally or alternatively passive filtering could be provided on the AC side and/or the DC side. Figure 4 illustrates an embodiment of a converter 400 where DC filters 401 are provided for DC side filtering.

As mentioned above various techniques for control of the converter may be employed. In general the techniques of current mapping may be used to ensure that the desired AC current flows in each phase limb and results in a desired DC current.

In general the principles of current mapping may involve a process comprising:

(a) obtaining an AC current demand for each converter phase limb, and a DC current demand;
(b) determining, for each limb portion (e.g. each limb portion between the respective AC node and a DC node), a limb portion current required to track the corresponding AC current demand and the required DC current demand;
(c) controlling the chain-link circuits (for at least part of each power cycle) as current controlled voltage sources to achieve the determined limb portion currents.

The process may additionally involve (d) carrying out mathematical optimization to determine optimal limb portion current(s) and/or optimal limb voltage source(s). This may involve selecting the best individual limb portion current and/or the best individual limb portion voltage source (with regard to chosen criteria) from a set of available alternatives. This allows the AC and DC current demands to be controlled independently of one another, e.g. by a higher level controller.

The control may effectively involve a using a model of the particular converter topology and mapping possible current paths. For example the AC and DC currents may be determined by conducting a Kirchhoff analysis of the converter topology to obtain various expressions for the AC and DC currents.

For example it will be clear that the two director switches of a given phase limb are not both to be controlled to be on at the same time, to avoid a DC short-circuit. For the converter embodiment illustrated in figure 2 it will be appreciated that if one director of a phase limb is on, say director switch $S_{W1}$ then the current $I_A$ will be equal to the current flowing in the high side limb portion, i.e. through $S_{W1}$, less any current through the chain-link circuit 101 a. Thus when the high side director switch is on the relevant chain-link circuit may be operated as equivalent to a low side voltage source and vice versa.

The various current paths may be represented in matrix form. In some instances the method may apply various weightings to the current contributions for each phase limb portion to account for particular operating conditions, for instance in response to various measured parameters of the converter operation.

Based on the matrix of possible current paths and, if appropriate any applied weightings, an analysis such as a nonlinear optimisation may be performed to identify substantially optimal phase limb portion currents to match the AC and DC current demand. The various voltage sources may then be controlled to minimise any error between an actual monitored current through the phase limb portion and the determined optimal phase limb portion.

The AC and DC current demand may be determined based on achieving a desired voltage waveform at the AC node 102a-c of each phase limb. In some embodiments the voltage at the AC node of 102a-c of each phase limb may be controlled with a trapezoidal waveform. In other words the voltage for each of the positive and negative half cycles represents a trapezoid. Thus, consider that the voltage at AC node 102a say is equal to the midpoint DC voltage, typically ground, at a phase angle equal to zero. At this point both director switches $S_{W1}$ and $S_{W4}$ are off (i.e. non-conducting). The chain-link circuit 101a is controlled to provide a relatively steady voltage ramp up to a voltage substantially equal to DC+ (i.e. a magnitude of $V_{DC}/2$). At this point, which may be at a certain phase angle $\alpha$, the high side director switch is turned on. The high side director switch may then be maintained on until a phase angle of $\pi$-$\alpha$ at which point it may be turned off (whilst chain-link circuit 102a maintains the voltage at the AC node substantially equal to DC+). The chain-link circuit 102a may then ramp the voltage down to zero (at a phase angle of $\pi$) and then further down to a voltage equal to DC- at a phase angle of $\pi$+$\alpha$, when the low side director switch may be turned on. The low side switch remain on until a phase angle of $2\pi$-$\alpha$ and then may be turned off before the chain-link circuit 102a ramps the voltage back up to zero at $2\pi$ and the cycle starts again. This produces a voltage waveform similar to that discussed above in relation to figure 1.

In some embodiments it may be desired to use a multi-slope (e.g. dual-slop) trapezoidal waveform, i.e. where the voltage ramp during the transition phase has at least two slopes, i.e. the rate of the voltage ramp up or down varies at least one during the voltage transition. Controlling the rate of transition and the phase angle and voltage level at which the change in slope occurs can be used to control aspects of the resulting AC waveform such as overall voltage magnitude and/or harmonic cancellation.

Additionally or alternatively space-vector pulse-width modulation (SVPWM) may be used. SVPWM is a known technique that has been applied to other types of AC converters.

In one example of a suitable control scheme the principal current flow equations that may be applied in a current mapping optimisation control process are as follows:

$$
\begin{pmatrix} I_a \\ I_b \\ I_c \\ I_{DC} \end{pmatrix} = \begin{pmatrix} S_{W1} & -S_{W4} & 0 & 0 & 0 & 0 & 0 & 0 \\ 0 & 0 & S_{W3} & -S_{W6} & 0 & 0 & 0 & 0 \\ 0 & 0 & 0 & 0 & S_{W5} & -S_{W2} & 0 & 0 \\ S_{W1} & 0 & S_{W3} & 0 & S_{W5} & 0 & S_{N+} & 0 \end{pmatrix} \begin{pmatrix} I_{A+} \\ I_{A-} \\ I_{B+} \\ I_{B-} \\ I_{C+} \\ I_{C-} \\ I_{N+} \\ I_{N-} \end{pmatrix} \qquad (1)
$$

where: $I_a$, $I_b$, $I_c$ and $I_{DC}$ are the AC side currents of the three phases and the DC side current respectively; $I_{A+}$, $I_{A-}$, $I_{B+}$, $I_{B-}$, $I_{c+}$, $I_{c-}$, are the director switch currents of the director switches of the phase limbs and $I_{N+}$, $I_{N-}$, are the director switch currents of the additional director switches 201 and 202; $S_{W1}$, $S_{W2}$, $S_{W3}$, etc. represent the state of the director switches according to the relationship $S_{Wi}$ = 1 when the relevant director switch is ON and if $S_{Wi}$ = 0, that means that the relevant director switch is OFF.

The exact switching sequences may be computed from various voltage waveforms that can be generated using SVPWM techniques. From the matrix equation (1), the optimal director currents can be computed as discussed below. It is noted that such current waveforms will depend on any particular converter operation e.g. active and reactive power demands.

The matrix equation as of equation. (1) can be reformatted as

$$
b = Ax \qquad (2)
$$

to obtain the appropriate director switches currents state vector,

$X^T = [I_A+, I_A-, I_{B+}, I_{B-}, I_{C+}, I_{C-}, IN+, I_N-]$. The best (optimal) solution to Equation (2) can be derived from the following linearly-constrained quadratic optimisation problem:

$$min_x \left\{ \frac{1}{2} x^T Q x \right\}$$

subject to:

$$Ax = b$$
$$L \leq x \leq U \qquad\qquad (3)$$

where $Q(Q \in R^{8 \times 8}, Q \geq 0)$ is the cost matrix and $L$ and $U$ are lower and upper bounds of director switch currents.

Equation (3) can be solved by various optimisation algorithms, for example including pragmatic convex optimisation routines, in a very fast and in a reliable manner.

As an example, in the absence of lower and upper director switch current bounds, the optimal solution to the above optimisation problem can be found as:

$$x_{opt} = Q^{-1} A^T \left( A Q^{-1} A^T \right)^{-1} b \qquad\qquad (4)$$

By using such an optimisation problem the necessary switching control signals to control the director switches in accordance with the desired sequence can be readily determined.

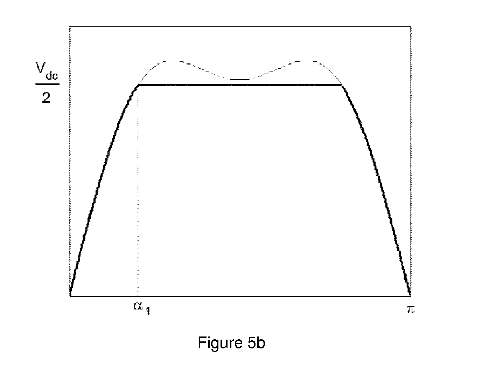

Figure 5 illustrates examples of voltage waveforms that may be generated using SVPWM techniques. In the examples shown in figure 5 the over modulation region consists of two sub regions: Figure 5a shows an example having two intersections between the saturation line and the modulation waveform per quarter wave, with the intersections occurring at phase angles $\alpha_1$ and $\alpha_2$. The selection of phase angles $\alpha_1$ and $\alpha_2$ can be easily done by employing Fourier analysis, by which the fundamental component modulation index and voltage-gain relations of over modulation can be chosen alternatively. Figure 5b illustrates how different base waveforms can lead to different phase angles. The waveform of figure 5b by contrast has only one intersection (leading towards simple trapezoidal desired converter voltage).

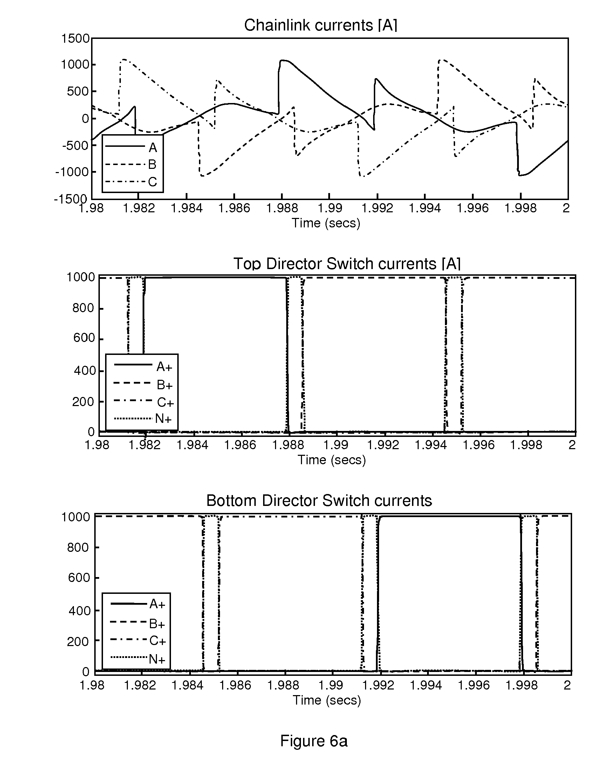

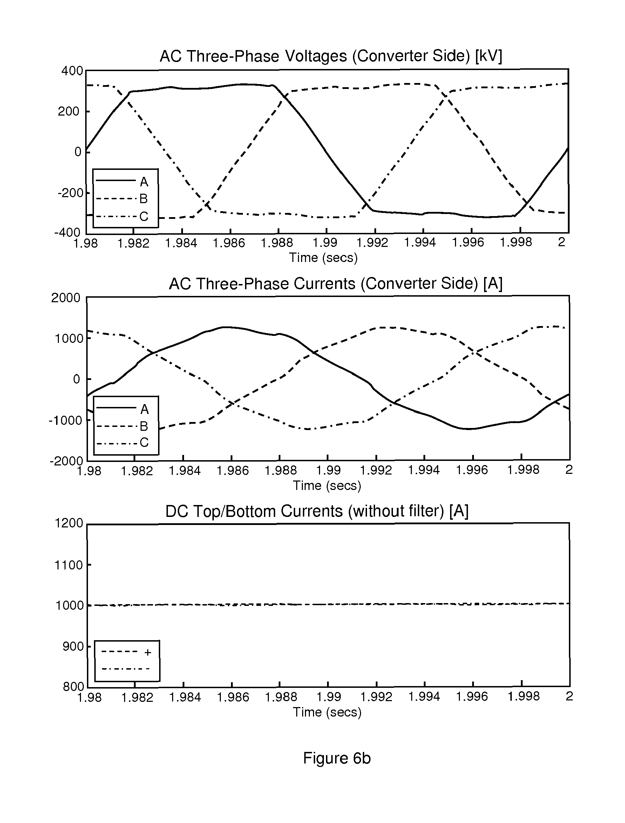

To verify the converter performance an embodiment of the converter such as described above with respect to figure 2 was simulated. Figure 6a and 6b shows the simulation results when operating with a control strategy to generate a single slope trapezoidal waveform at the AC nodes 102a-c. The top plot of figure 6a shows the currents through the chain-link circuits 101 a-c (top plot). The middle plot shows the currents through the high-side director switches, including the additional director switch 201. The lower plot shows the currents through the low-side director switches, including the additional director switch 202. The time scale of figure 6a shows substantially one complete power cycle. It can be seen that the chain-link circuits 101 a-c are operating to provide current substantially throughout the power cycle.

Figure 6b shows the resulting voltages and currents. The top plot of figure 6b shows the converter side AC voltages at the AV nodes 102a-c. The trapezoidal voltage waveforms can be clearly seen. The middle plot of figure 6b shows the AC currents flowing from the AC nodes 102a-c. It can be seen that the AC current is relatively smooth without any AC filtering. Finally the lower plot of figure 6b shows the DC converter currents without any filtering. This shows a stable DC current and thus provides good converter performance without the need for any large DC link capacitances.

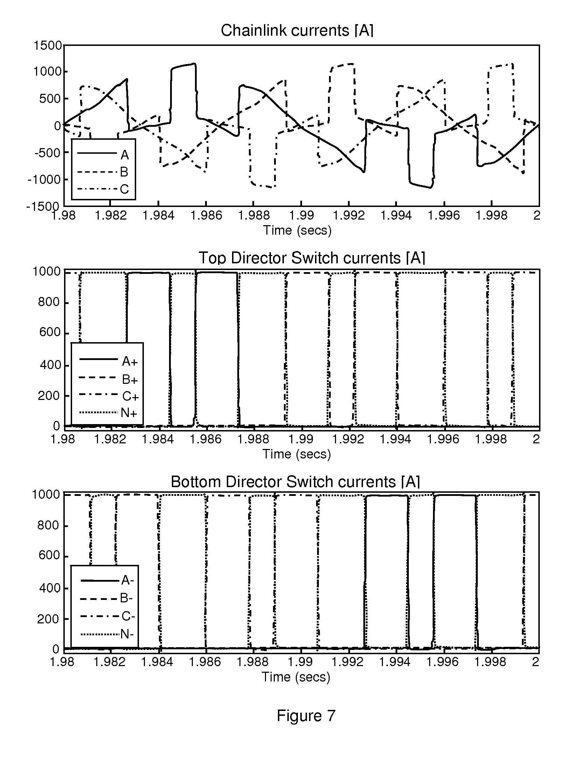

Figure 7 illustrates simulated converter performance using SVPWM type techniques. Again the top plot shows chain-link currents, the middle plot shows high-side director switch currents and the lower plot shows low-side director switch currents. It can be seen from the director switch currents that each high side and low side switch has two periods of conduction in each power cycle separated by a small period of non-conduction, i.e. the waveform is similar to that illustrated in figure 5a.

In general then embodiments of the present invention provide a relatively low cost and low footprint converter with good performance. Compared to the conventional CTB type converter such as shown in figure 1, embodiments of the invention can achieve good performance with any AC side chain-link circuit. Embodiments of the invention also allow soft switching of the six main director switches and DC active filtering. Control strategies using current-controlled voltage sources, e.g. SVPWM and single and dual trapezoidal strategies, can be used with this converter topology, resulting in clean AC voltages and currents without requiring active AC filtering. Active filtering on the DC side can also be considered in some application to improve the DC side performance.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single feature or other unit may fulfil the functions of several units recited in the claims. Any reference signs in the claims shall not be construed so as to limit their scope.

**Claims**

1. A voltage source converter comprising:

   a plurality of phase limbs connected between high and low DC terminals;
   wherein each phase limb comprises:

      a high side director switch connecting the high DC terminal to an AC node for that phase limb;
      a low side director switch connecting the AC node to the low DC terminal; and
      a chain-link circuit, a first end of the chain-link circuit being electrically coupled to the AC node for that phase limb and a second end of the chain-link circuit being connected to at least one chain-link circuit of another phase limb;
      wherein each chain-link circuit comprises a plurality of series-connected chain-link modules, each of the chain-link modules comprising at least one energy storage element that can be selectively connected in series with the other modules or bypassed;

   the voltage source converter further comprising first and second additional director switches being connected in series between the high and low DC terminals.

2. A voltage source converter as claimed in claim 1 where the second ends of each of said chain-link circuits are connected to a common connection point.

3. A voltage source converter as claimed in claim 2 wherein said common connection point is electrically connected to a first node located in the series connection between said first and second additional director switches.

4. A voltage source converter as claimed in claim 2 or claim 3 wherein there are no DC link capacitors connected between the high and low DC terminals.

5. A voltage source converter as claimed in claim 1 wherein said chain-links circuits are all connected to one another in a loop such that the second end of one chain-link circuit is connected to the first end of the next chain-link circuit in the loop.

6. A voltage source converter as claimed in claim 5 comprising first and second capacitances in parallel with said first and second director switches, and an inductor connected between a first node located in the series connection between said first and second additional director switches and a second node located in the series connection between said first and second capacitances.

7. A voltage source converter as claimed in claim 6 comprising a controller, wherein said controller is configured to control said first and second additional director switches to minimise current flow through said inductor.

8. A voltage source converter as claimed in any preceding claim wherein the director switches of the phase limbs comprise thyristors.

9. A voltage source converter as claimed in any preceding claim comprising a controller for controlling said chain-link circuits as current controlled voltage sources for at least part of a power cycle.

10. A voltage source converter as claimed in claim 9 wherein said controller is configured to control the chain-link circuit of a phase limb as a high-side voltage source during a period when the low-side director switch of that phase limb is on, and as a low-side voltage source during a period when the high-side director switch of that phase limb is on.

**11.** A voltage source converter as claimed in claim 9 or claim 10 wherein the controller is configured to control said chain-link circuits and said first and second additional director switches to generate a trapezoidal voltage waveform at the AC node of each phase limb.

**12.** A voltage source converter as claimed in claim 11 wherein said trapezoidal waveform is a multi-slope trapezoidal waveform.

**13.** A voltage source converter as claimed in claim 9 or claim 10 wherein the controller is configured to control said chain-link circuits and said first and second additional director switches to apply space-vector pulse-width-modulation control.

**14.** A voltage source converter as claimed in any preceding claim comprising at least one of a high-side DC filter connected to said high-side DC terminal and a low-side DC filter connected to said low-side DC terminal.

**15.** A voltage source converter as claimed in any preceding claim wherein there are three phase limbs and the converter comprises only three chain-link circuits.

**16.** A voltage source converter as claimed in any preceding claim wherein said first and second additional director switches each comprise a plurality of switch elements.

Fig. 1

Figure 2

Figure 3

Figure 4

Figure 5a

Figure 5b

## Chainlink currents [A]

## Top Director Switch currents [A]

## Bottom Director Switch currents

Figure 6a

Figure 6b

Figure 7

**EUROPEAN SEARCH REPORT**

Application Number

EP 14 17 1352

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2011/050847 A1 (AREVA T & D UK LTD [GB]; TRAINER DAVID [GB]; CROOKES WILLIAM [GB]; OAT) 5 May 2011 (2011-05-05)<br>----- | 1-16 | INV.<br>H02M7/483 |
| A | DAVIDSON C C ET AL: "Innovative concepts for hybrid Multi-Level converters for HVDC power transmission",<br>INTERNATIONAL CONFERENCE ON AC AND DC POWER TRANSMISSION.(ACDC 2010), XX, XX,<br>19 October 2010 (2010-10-19), pages 1-5, XP002675729,<br>DOI: 10.1049/CP.2010.0982<br>ISBN: 978-1-84919-308-5<br>----- | 1-16 | |
| A | TRAINER D R ET AL: "B4-111 A new Hybrid Voltage-Sourced Converter for HVDC Power Transmission",<br>CIGRE SESSION 2010, CIGRE, PARIS, FR,<br>23 August 2010 (2010-08-23), pages 1-12, XP008134692,<br>----- | 1-16 | |
| A | EP 2 012 419 A1 (MITSUBISHI ELECTRIC CORP [JP]) 7 January 2009 (2009-01-07)<br>----- | 1-16 | TECHNICAL FIELDS SEARCHED (IPC)<br><br>H02M |
| A | WO 2012/163841 A1 (ABB TECHNOLOGY LTD [CH]; BARUPATI PRAVEEN KUMAR [IN]; SUBRAMANIAN SASI)<br>6 December 2012 (2012-12-06)<br>----- | 1-16 | |
| A | WO 2011/160678 A1 (ALSTOM TECHNOLOGY LTD) 29 December 2011 (2011-12-29)<br>----- | 1-16 | |
| A | WO 2012/055435 A1 (ALSTOM GRID UK LTD [GB]; GREEN TIMOTHY CHARLES [GB]; MERLIN MICHAEL MA) 3 May 2012 (2012-05-03)<br>----- | 1-16 | |

The present search report has been drawn up for all claims

| Place of search | Date of completion of the search | Examiner |
|---|---|---|
| Munich | 9 February 2015 | Jansen, Helma |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                     EP 14 17 1352

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2015

| Patent document cited in search report | | Publication date | Patent family member(s) | | Publication date |
|---|---|---|---|---|---|
| WO 2011050847 | A1 | 05-05-2011 | EP<br>WO | 2494687 A1<br>2011050847 A1 | 05-09-2012<br>05-05-2011 |
| EP 2012419 | A1 | 07-01-2009 | CN<br>EP<br>KR<br>US<br>WO | 101432957 A<br>2012419 A1<br>20080109878 A<br>2009116268 A1<br>2007129456 A1 | 13-05-2009<br>07-01-2009<br>17-12-2008<br>07-05-2009<br>15-11-2007 |
| WO 2012163841 | A1 | 06-12-2012 | NONE | | |
| WO 2011160678 | A1 | 29-12-2011 | EP<br>WO | 2586112 A1<br>2011160678 A1 | 01-05-2013<br>29-12-2011 |
| WO 2012055435 | A1 | 03-05-2012 | CA<br>CN<br>EP<br>KR<br>US<br>WO | 2815394 A1<br>103283140 A<br>2633612 A1<br>20130132451 A<br>2013279211 A1<br>2012055435 A1 | 03-05-2012<br>04-09-2013<br>04-09-2013<br>04-12-2013<br>24-10-2013<br>03-05-2012 |

EPO FORM P0459

For more details about this annex : see Official Journal of the European Patent Office, No. 12/82

## EP 2 953 255 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011050847 A